(19) **Europäisches Patentamt / European Patent Office / Office européen des brevets**

(11) **EP 2 704 589 B1**

(12) **EUROPEAN PATENT SPECIFICATION**

(45) Date of publication and mention
of the grant of the patent:
**23.10.2019 Bulletin 2019/43**

(21) Application number: **12721092.0**

(22) Date of filing: **02.05.2012**

(51) Int Cl.:
*A23K 50/40* (2016.01)   *A23K 50/48* (2016.01)
*A23K 20/163* (2016.01)   *A23K 20/20* (2016.01)

(86) International application number:
**PCT/US2012/036035**

(87) International publication number:
**WO 2012/151227 (08.11.2012 Gazette 2012/45)**

(54) **COMPOSITIONS COMPRISING A GLUCOSE ANTI-METABOLITE AND SELENIUM**

ZUSAMMENSETZUNGEN MIT EINEM GLUCOSE-ANTI-METABOLIT UND SELEN

COMPOSITION CONTENANT UN ANTI-MÉTABOLITE DU GLUCOSE, AINSI QUE DU SÉLÉNIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.05.2011 US 201113098741**

(43) Date of publication of application:
**12.03.2014 Bulletin 2014/11**

(73) Proprietor: **IAMS Europe B.V.
7742 PB Coevorden (NL)**

(72) Inventors:
- **LUHADIYA, Ashok, Premchand
  Cincinnati
  Ohio 45248 (US)**
- **DAVENPORT, Gary, Mitchell
  Dayton
  Ohio 45415 (US)**
- **ZHANG, Jin
  Clayton
  Ohio 45315 (US)**
- **INGRAM, Donald, Keith
  Baton Rouge
  Louisiana 70809 (US)**
- **ROTH, George, S.
  Pylesville
  Maryland 21132 (US)**
- **SHOVELLER, Anna, Katharine
  Englewood
  Ohio 45322 (US)**
- **FLICKINGER, Elizabeth, Anne
  Dayton
  Ohio 45415 (US)**

(74) Representative: **Zimmermann & Partner
Patentanwälte mbB
Postfach 330 920
80069 München (DE)**

(56) References cited:
**US-A1- 2005 249 841    US-A1- 2009 252 834**

- **LEE S P: "Medicinal plant composition suitable
  for each blood type", WPI/THOMSON,, vol. 2004,
  no. 46, 22 March 2004 (2004-03-22), XP002527885,**
- **Johanne Poirier ET AL: "High-dose supplemental
  selenite to male Syrian hamsters fed
  hypercholesterolaemic diets alters Ldlr, Abcg8
  and Npc1l1 mRNA expression and lowers plasma
  cholesterol concentrations", British Journal of
  Nutrition, vol. 108, no. 02, 9 December 2011
  (2011-12-09), pages 257-266, XP55390565, UK
  ISSN: 0007-1145, DOI:
  10.1017/S0007114511005587**
- **S. Yu ET AL: "Primary hair growth in dogs
  depends on dietary selenium concentrations*",
  JOURNAL OF ANIMAL PHYSIOLOGY AND
  ANIMAL NUTRITION., vol. 90, no. 3-4, 1 April 2006
  (2006-04-01), pages 146-151, XP055390589, DE
  ISSN: 0931-2439, DOI:
  10.1111/j.1439-0396.2005.00575.x**

- GRA YNA JARZY SKA ET AL: "Selenium and 17 other largely essential and toxic metals in muscle and organ meats of Red Deer () Consequences to human health", ENVIRONMENT INTERNATIONAL, PERGAMON PRESS, US, vol. 37, no. 5, 28 February 2011 (2011-02-28), pages 882-888, XP028203965, ISSN: 0160-4120, DOI: 10.1016/J.ENVINT.2011.02.017 [retrieved on 2011-03-03]

- MATTI KORHOLA & KARI EDELMANN: "YEAST PREPARATIONS ENRICHED WITH TRACE ELEMENTS", ACTA PHARMACOLOGICA ET TOXICOLOGICA, SUPPLEMENTUM., vol. 59, no. s7, 2009, pages 148-151, MUNKSGAARD INTERNATIONAL PUBLISHERS, COPENHAGEN. ISSN: 0065-1508

**Description**

FIELD

Embodiments of the invention relate to compositions comprising a glucose anti-metabolite and selenium as defined in claim 1.

BACKGROUND

Biological theories have correctly predicted the finding that a restriction of caloric intake by food deprivation slows down certain undesirable cellular processes in laboratory animals, many associated with aging and age-related diseases.

In particular, caloric restriction has been shown to consistently extend the life span, delay onset and slow tumor progression, and retard physiologic aging in many systems. Indeed, research spanning more than seventy years has shown that caloric restriction is a nutritional intervention that consistently extends longevity in animals. See Weindruch and Walford, "The Retardation of Aging and Disease by Dietary Restriction," Springfield, IL: Charles C. Thomas (1988); Yu, "Modulation of Aging Processes by Dietary Restriction," Boca Raton: CRC Press (1994); and Fishbein, "Biological Effects of Dietary Restriction," Springer, New York (1991). These effects of caloric restriction on life span and tumorigenesis have been reported numerous times since the early studies of McKay. See McKay et al., "The Effect of Retarded Growth Upon the Length of Lifespan and Upon Ultimate Body Size," J. Nutr., Vol. 10, pp. 63 - 79 (1935). Indeed, over the past two decades, a resurgence of interest in caloric restriction in gerontology has led to the general acceptance that this dietary manipulation slows physiologic aging in many systems. See Weindruch and Walford, "The Retardation of Aging and Disease by Dietary Restriction," Springfield, IL: Charles C. Thomas (1988); Yu, "Modulation of Aging Processes by Dietary Restriction," Boca Raton: CRC Press (1994); and Fishbein, "Biological Effects of Dietary Restriction," Springer, New York (1991) and Masoro, E.J. "Overview of Caloric Restriction and Ageing," Mech. Aging Dev., Vol. 126, pp 913-922 (2005).

Reductions in fasting glucose and insulin levels and improvements in insulin sensitivity are readily measured biomarkers of caloric restriction. Calorically restricted rodents exhibit lower fasting glucose and insulin levels, and the peak glucose and insulin levels reached during a glucose challenge are reduced in those on caloric restriction. See Kalant et al., "Effect of Diet Restriction on Glucose Metabolism and Insulin Responsiveness and Aging Rats," Mech. Aging Dev., Vol. 46, pp. 89 - 104 (1988). It is also known that hyperinsulinemia is a risk factor associated with several such disease processes, including heart disease and diabetes (Balkau and Eschwege, Diabetes Obes. Metab. 1 (Suppl. 1): S23 - 31, 1999). Reduced insulin levels and body temperature are two of the most reliable indicators of this altered metabolic profile (Masoro et al., J. Gerontol. Biol. Sci. 47:B202-B208, 1992); Koizumi et al., J. Nutr. 117: 361 - 367, 1987; Lane et al., Proc. Nat. Acad. Sci. 93:4154 - 4164, 1996).

US 2005/0249841 A1 relates to pet food compositions, some of which may comprise mannoheptulose. US 2009/0252834 A1 relates to compositions comprising glucose anti-metabolites.

Glucose anti-metabolites such as 2-deoxy-D-glucose are compounds related to glucose. However, due to structural differences from glucose such compounds block or inhibit certain aspects of carbohydrate metabolism and may therefore mimic the effects of caloric restriction (Rezek et al., J. Nutr. 106:143 - 157, 1972). These anti-metabolites exert a number of physiological effects, including reduction of body weight, decrease in plasma insulin levels, reduction of body temperature, retardation of tumor formation and growth, and elevation of circulating glucocorticoid hormone concentrations. (For a review see Roth et al., Ann. NY Acad. Sci. 928:305 - 315, 2001). These physiological effects result from inhibition of carbohydrate metabolism.

Selenium is an essential micronutrient in animals that functions as a cofactor for reduction of several antioxidant enzymes including glutathione peroxidases and certain forms of thioredoxin reductase. It is also a component of the amino acids selenocysteine and selenomethionine. Selenium is also required for thyroid function serving as a co-factor for three thyroid hormone deiodinases which activate and then deactivate various thyroid hormones and their metabolites. In humans, selenium combines with cysteine to form 25 different selenocysteine-containing compounds collectively called selenoproteins. Selenium-containing enzymes are referred to as selenoenzymes. In the article of Lee, "Medicinal plant composition suitable for each blood type", 2004, a composition comprising various kinds of nutrients, e.g. dried yeast, is described.

When provided in the proper range, selenium delivered in the diet has many potential health benefits that mimic the effects of calorie restriction. Without being bound by theory, it is thought that its anti-cancer and anti-diabetic actions can likely work through its actions to reduce oxidative stress and inflammation, and these actions can synergistically interact with those of the glucose anti-metabolites and provide additional beneficial effects to selenium when both are part of diets of companion animals.

Thus, it would be beneficial to provide nutrition such as a glucose anti-metabolite in combination with selenium, specifically for companion animals. Accordingly, embodiments of the invention relate to such a composition.

The scope of the invention is defined by the claims.

SUMMARY

A pet food composition comprising a glucose anti-metabolite and a source of selenium is disclosed. The source of selenium is an ingredient having at least 100 $\mu$g selenium per 100 g of the ingredient or an inorganic source of selenium. The selenium content provided by the source of selenium is 1.25 to 10 $\mu$g per g of the composition. The composition can include the glucose anti-metabolite at less than about 5% by weight of the composition. The added selenium can be an inorganic source or an organic source. The added selenium can be a source of selenium selected from the group consisting of sodium selenite, sodium selanate, selenium oxide, selenide, selenocysteine, selenomethionine, selenized yeast, selenized garlic, selenized cabbage and combinations and mixtures thereof. The glucose anti-metabolite is selected from the group consisting of 2-deoxy-D-glucose; 5-thio-D-glucose; 3-O-methylglucose; 1,5-anhydro-D-glucitol; 2,5-anhydro-D-glucitol; 2,5-anhydro-D-mannitol; mannoheptulose; and mixtures and combinations thereof. The composition can be selected from the group consisting of wet composition, semi-moist composition, dry composition, and combinations thereof. The composition is a nutritionally balanced pet food composition.

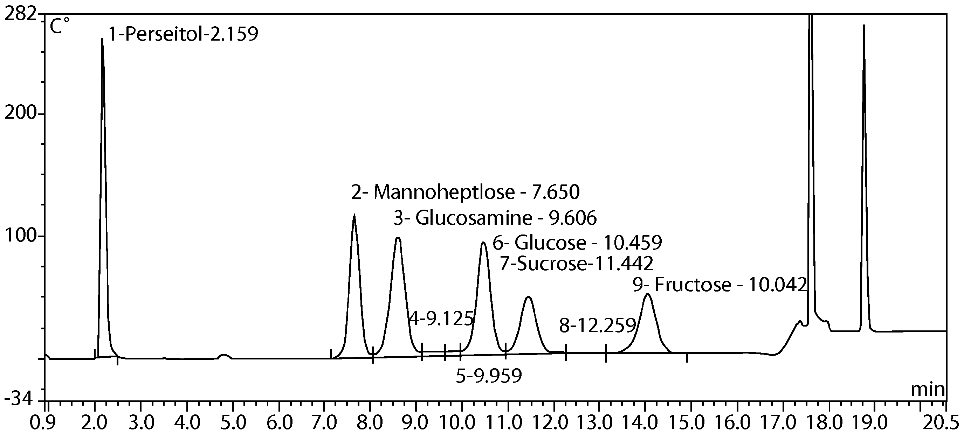

BRIEF DESCRIPTION OF THE DRAWING

The figure is an integrated amperometry waveform produced by the glucose anti-metabolite method.

DETAILED DESCRIPTION

Definitions

As used herein, the articles including "the", "a", and "an", when used in a claim or in the specification, are understood to mean one or more of what is claimed or described.

As used herein, the terms "include", "includes", and "including" are meant to be non-limiting.

As used herein, the term "plurality" means more than one.

As used herein, the terms "animal" or "pet" mean a domestic animal including, but not limited to domestic dogs (canines), cats (felines), horses, cows, ferrets, rabbits, pigs, rats, mice, gerbils, hamsters, horses, and the like. Domestic dogs and domestic cats are particular examples of pets and are referred to herein as "companion animals." It should be understood that throughout this disclosure when using the term animal, pet, or companion animal, the animal, pet, or companion animal is in a non-diseased state, unless otherwise stated.

As used herein, the terms "animal feed", "animal feed compositions", "animal feed kibble", "pet food", or "pet food composition" all mean a composition intended for ingestion by a pet. Pet foods can include, without limitation, nutritionally balanced compositions suitable for daily feed, as well as supplements and/or treats, which may or may not be nutritionally balanced.

As used herein, the term "nutritionally balanced" means that a composition, such as pet food, has known required nutrients to sustain life in proper amounts and proportions based on recommendations of recognized authorities, including governmental agencies, such as, but not limited to, Unites States Food and Drug Administration's Center for Veterinarian Medicine, the American Feed Control Officials Incorporated, in the field of pet nutrition, except for the additional need for water.

All oral doses of the invention are calculated per kilogram of body weight of the companion animal unless otherwise indicated.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

All lists of items, such as, for example, lists of ingredients, are intended to and should be interpreted as Markush groups. Thus, all lists can be read and interpreted as items "selected from the group consisting of' ... list of items ... "and combinations and mixtures thereof."

Referenced herein are trade names for components including various ingredients utilized in embodiments of the invention. The inventors herein do not intend to be limited by materials under a certain trade name. Equivalent materials (e.g., those obtained from a different source under a different name or reference number) to those referenced by trade name may be substituted and utilized in the descriptions herein.

The processes, methods, compositions, and apparatuses herein may comprise, consist essentially of, or consist of any of the features or embodiments as described herein.

In the description of the various embodiments of the disclosure, various embodiments or individual features are disclosed. As will be apparent to the ordinarily skilled practitioner, all combinations of such embodiments and features are possible and can result in preferred executions of the disclosure.

Embodiments of the invention

Embodiments of the invention relate to compositions comprising selenium and a glucose anti-metabolite component selected from the group consisting of 2-deoxy-D-glucose; 5-thio-D-glucose; 3-O-methylglucose; 1,5-anhydro-D-glucitol; 2,5-anhydro-D-glucitol; 2,5-anhydro-D-mannitol; mannoheptulose; and mixtures and combinations thereof. Without intending to be limited by theory, these components are accepted to be glucose anti-metabolites. In another embodiment, the components may be present in the recited compositions by virtue of a component of plant matter such as avocado, or other enriched source of mannoheptulose such as alfalfa, fig, primrose, and the like.

Glucose anti-metabolites

The glucose anti-metabolite components as disclosed herein include 2-deoxy-D-glucose, 5-thio-D-glucose, 3-O-methylglucose, anhydrosugars including 1,5-anhydro-D-glucitol, 2,5-anhydro-D-glucitol, and 2,5-anhydro-D-mannitol, mannoheptulose, and mixtures and combinations thereof. Mannoheptulose is one particular glucose anti-metabolite. In one embodiment, mannoheptulose may be present in the recited compositions as a component of plant matter such as an avocado, avocado extract, avocado meal, avocado concentrate, or other enriched source of mannoheptulose. Non-limiting examples of enriched sources of mannoheptulose include alfalfa, fig, or primrose. The plant matter may include the fruit, seed (or pit), branches, leaves, or any other portion of the relevant plant or combinations thereof.

Avocado (also commonly referred to as alligator pear, aguacate, or palta) contains unusually enriched sources of mannoheptulose, as well as related sugars and other carbohydrates. Avocado is a sub-tropical evergreen tree fruit, growing most successfully in areas of California, Florida, Hawaii, Guatemala, Mexico, the West Indies, South Africa, and Asia.

Species of avocado include, for example, Persea Americana and Persea nubigena, including all cultivars within these illustrative species. Cultivars may include 'Anaheim,' 'Bacon,' 'Creamhart,' 'Duke,' 'Fuerte,' 'Ganter,' 'Gwen,' 'Hass,' 'Jim,' 'Lula,' 'Lyon,' 'Mexicola Grande,' 'Murrieta Green,' 'Nabal,' 'Pinkerton,' 'Queen,' 'Puebla,' 'Reed,' 'Rincon,' 'Ryan,' 'Spinks,' 'Topa Topa,' 'Whitsell,' 'Wurtz,' and 'Zutano.' The fruit of the avocado is particularly preferred for use herein, which may contain the pit or wherein the pit is removed or at least partially removed. Fruit from Persea Americana is particularly preferred for use herein, as well as fruit from cultivars which produce larger fruits (e.g., about 12 ounces or more when the fruit is mature), such as Anaheim, Creamhart, Fuerte, Hass, Lula, Lyon, Murrieta Green, Nabal, Queen, Puebla, Reed, Ryan and Spinks.

Plant matter from alfalfa, fig, or primrose is also reported to provide relatively high levels of mannoheptulose. Alfalfa is also referred to as Medicago sativa. Fig or Ficus carica (including Cluster fig or Sycamore fig, for example) may also be used, as well as primrose or Primula officinalis.

It has been discovered that particular levels of a component selected from 2-deoxy-D-glucose; 5-thio-D-glucose; 3-O-methylglucose; 1,5-anhydro-D-glucitol; 2,5-anhydro-D-glucitol; 2,5-anhydro-D-mannitol; mannoheptulose; and mixtures and combinations thereof can be useful herein. In particular, it has been found that relatively low levels, as well as relatively high doses of the component, while useful, may provide less than optimal efficacy for desired purposes. Dosage will depend upon the glucose anti-metabolite component used and will vary depending upon the size and condition of the companion animal to which the glucose anti-metabolite is to be administered. Dosage in the range of about 0.0001 or about 0.001 grams/kg to about 1 g/kg can be beneficial in some embodiments. As used herein, when dosage in mg/kg is used, the "mg" refers to the level of the component, such as mannoheptulose, and "kg" refers to kilograms of body weight of the companion animal, such as a dog or cat. Dosage at the lower range may also be appropriate when using 2-deoxy-D-glucose in large animals. Higher dosage, particularly of compounds such as 5-thio-D-glucose or 2,5-anhydro-D-mannitol, may also be readily tolerated. In one embodiment, the dosage of the component provided to a companion animal on a daily basis may be from about 0.1, 0.5, 1, 2, or 5 mg/kg to about 15, 20, 50, 100, 150, or 200 mg/kg, and all combinations of these ranges, wherein "mg" refers to the level of the component and "kg" refers to kilograms of body weight of the companion animal. In one embodiment, the dosage to the companion animal, on a daily basis, may be from about 1 mg/kg to about 15 mg/kg, from about 2 mg/kg to about 10 mg/kg, or from about 2 mg/kg to about 5 mg/kg. In one embodiment, the dosage to the companion animal, on a daily basis, may be from about 1 mg/kg to about 5 mg/kg, from about 1.5 mg/kg to about 5 mg/kg, from about 2 mg/kg to about 5 mg/kg, or about 2 mg/kg. In certain embodiments, these amounts may translate to compositions comprising less than about 5%, or less than about 2%, or from about 0.0001% to about 0.5%, or from about 0.1% to about 10%, or from about 0.1% to about 5%, of the component, all by weight of the composition. All ranges therebetween are envisioned. The level of component may be determined by one of ordinary skill in the art based on a variety of factors, for example, the form of the composition (e.g., whether a dry composition, semi-moist composition, wet composition, or supplement, or any other form or mixture thereof). The ordinarily skilled artisan will be able to utilize the preferred dosage and determine the optimal level of component within a given composition.

Similarly, the overall dosage amount of the component on a daily basis provided to the companion animal may be provided. Such a daily dosage amount can be from about 0.1 mg per day to about 1000 mg per day. Such daily dosage amounts can be dependent on the size of the companion animal consuming the composition. For example, in one embodiment, larger companion animals may consume more than smaller companion animals. Of course, that is consistent with the dosing disclosed herein with respect to a dosing amount per mass of the companion animal. Thus, in one embodiment, as the companion animal increases in size, more of the composition can be administered.

Accordingly, in one embodiment, such a daily dosage amount can correspond to the dosage on a daily basis per mass of the companion animal, as described herein. Specifically, daily dosage amounts can range, in some embodiments, from about 0.1 mg per day to about 1000 mg per day, or even more, depending on the size of the companion animal and the daily dosage amounts as described above. In other embodiments, the daily dosage can be from about 1 mg per day to about 500 mg per day, or from about 1 mg per day to about 200 mg per day, or from about 1 mg per day to about 100 mg per day, or from about 5 mg day per day to about 100 mg per day, or from about 5 mg per day to about 80 mg per day, or from about 10 mg per day to about 50 mg per day, or about 40 mg per day. All ranges therebetween are also envisioned.

Similarly, wherein an extract or meal of plant matter is utilized in the compositions herein, levels of extract or meal may be dependent upon level of efficacious component within such extract or meal. Extracts and/or meals have been found herein which comprise from about 0.5% to about 99% of the glucose anti-metabolite component, alternatively from about 0.5% to about 75% of the glucose anti-metabolite component, alternatively from about 0.5% to about 50% of the glucose anti-metabolite component, alternatively, from about 0.5% to about 25% of the glucose anti-metabolite component, all by weight of the extract or meal. Extracts and/or meals have been found herein in which the glucose anti-metabolite component may be from about 0.5, 1, 2, 5, or 10% to about 15, 25, 50 or 75% by weight of the extract and/or meal.

Selenium

As described, the composition of embodiments of the present invention comprise selenium. In one embodiment, the selenium can be either added selenium or endogenous selenium. In one embodiment, the composition can comprise both added selenium and endogenous selenium.

As used herein, when referring to selenium in the composition, "added" selenium means any ingredient that is added to the composition and has at least 100 $\mu$g selenium per 100 g of the ingredient (irrespective of its origin/source). "Added" selenium also means any inorganic source of selenium, as listed below. Thus, for the sake of clarity, any inorganic selenium added is considered added selenium herein. As used herein, when referring to selenium in the composition, "endogenous" selenium means selenium that is naturally occurring in plant sources (excluding nuts) and/or animal sources that are primarily used as sources of energy, protein, fat, etc. in a pet food composition. For example, endogenous selenium can be found in grains and animal and plant based protein sources.

Selenium can be present in the composition through any number of sources. Sources of selenium can include, but are not limited to, inorganic and organic sources, and combinations thereof.

Inorganic sources of selenium can include, but are not limited to, sodium selenite, sodium selanate, selenium oxide, selenide, selenium-rich soils, and combinations and mixtures thereof.

Organic sources of selenium can include, but are not limited to nuts, cereals, meat, mushrooms, fish, eggs, selenomethionine, dimethyl selenide, selenocysteine, methylselenocysteine, selenized yeast (commercially available as Sel-Plex), selenized garlic, selenized cabbage and other known sources of selenium. Brazil nuts are a rich ordinary dietary source, but high levels can also be found in kidney, tuna, crab, and lobster. For example, nuts are known to contain over 100 $\mu$g selenium per 100 g of nuts, and Brazil nuts are known to contain over 1000 $\mu$g per 100 g Brazil nuts.

The added selenium is present at from about 1.25 to about 10.0 $\mu$g/g diet, or from about 1.25 to about 9.0 $\mu$g/g diet, or from about 1.25 to about 8.0 $\mu$g/g diet, or from about 1.25 to about 7.0 $\mu$g/g diet, or from about 1.25 to about 6.0 $\mu$g/g diet, or from about 2.0 to about 6.0 $\mu$g/g diet, or from about 2.0 to about 5.0 $\mu$g/g diet, or from about 2.0 to about 4.0 $\mu$g/g diet, or from about 3.0 to about 6.0 $\mu$g/g diet, or from about 3.0 to about 4.0 $\mu$g/g diet, or about 2 $\mu$g/g diet, or about 3 $\mu$g/g diet, or about 4 $\mu$g/g diet, or about 5 $\mu$g/g diet, or about 6 $\mu$g/g diet, or about 7 $\mu$g/g diet.

The composition can include varying amounts of endogenous selenium. In one embodiment, the endogenous selenium can be present at a level of at least 0.10 $\mu$g per g diet. In other embodiments, the endogenous selenium can be present at from about 0.10 to about 1.00 $\mu$g/g diet, or from about 0.10 to about 0.90 $\mu$g/g diet, or from about 0.10 to about 0.80 $\mu$g/g diet, or from about 0.10 to about 0.70 $\mu$g/g diet, or from about 0.10 to about 0.60 $\mu$g/g diet, or from about 0.20 to about 0.60 μg/g diet, or from about 0.20 to about 0.50 μg/g diet, or from about 0.20 to about 0.40 μg/g diet, or from about 0.30 to about 0.60 μg/g diet, or from about 0.30 to about 0.40 μg/g diet, or about 0.2 μg/g diet, or about 0.3 μg/g diet, or about 0.4 μg/g diet, or about 0.5 μg/g diet, or about 0.6 μg/g diet, or about 0.7 μg/g diet.

Any combination of added selenium and endogenous selenium can be included in the compositions herein. Thus, the total amount of selenium, including any added selenium and any endogenous selenium, in the compositions can be present at from about 0.15 to about 9.0 μg/g diet, or from about 0.15 to about 8.0 μg/g diet, or from about 0.15 to about 7.0 μg/g diet, or from about 0.15 to about 6.0 μg/g diet, or from about 0.20 to about 6.0 μg/g diet, or from about 0.20 to about 5.0 μg/g diet, or from about 0.20 to about 4.0 μg/g diet, or from about 0.30 to about 6.0 μg/g diet, or from about 0.30 to about 4.0 μg/g diet, or about 2 μg/g diet, or about 3 μg/g diet, or about 4 μg/g diet, or about 5 μg/g diet, or about 6 μg/g diet, or about 7 μg/g diet.

Compositions

Accordingly, embodiments of the invention are directed to a composition that is intended for ingestion by a companion animal and that comprises a glucose anti-metabolite and selenium, as described herein. Compositions include foods intended to supply necessary dietary requirements. Optionally, the composition herein may be a dry composition (for example, kibble), semi-moist composition, wet composition, or any mixture thereof. Further described is a composition that is a supplement, such as a gravy, drinking water, yogurt, powder, suspension, chew, treat (e.g., biscuits) or any other delivery form.

The composition is nutritionally balanced, such as a pet food kibble. Further described is a composition that is not nutritionally balanced, (not part of the invention) such as a supplement, treat, or other delivery form for a pet. Nutritionally balanced pet foods and supplements, and the manufacturing processes thereof, are well known in the art.

The compositions used herein may optionally comprise one or more further components. Other components are beneficial for inclusion in the compositions used herein, but are optional for purposes of the invention. In one embodiment, the compositions may comprise, on a dry matter basis, from about 10% to about 90% crude protein, alternatively from about 20% to about 50% crude protein, alternatively from about 20% to about 40% crude protein, by weight of the composition, or alternatively from about 20% to about 35% crude protein, by weight of the composition. The crude protein material may comprise vegetable-based proteins such as soybean, cereals (corn, wheat, etc), cottonseed, and peanut, or animal-based proteins such as casein, albumin, and meat protein. Non-limiting examples of meat protein useful herein include a protein source selected from the group consisting of beef, pork, lamb, poultry, fish, and mixtures thereof.

Furthermore, the compositions may comprise, on a dry matter basis, from about 5% to about 40% fat, alternatively from about 10% to about 35% fat, by weight of the composition.

Embodiments related to compositions of the invention may further comprise a source of carbohydrate. In one embodiment, the compositions may comprise from about 35%, by weight of the composition, up to about 50%, by weight of the composition, carbohydrate source. In other embodiments, the composition can comprise from about 35% to about 45%, by weight of the composition, or from about 40% to 50%, by weight of the composition, carbohydrate source. Grains or cereals such as rice, corn, milo, sorghum, barley, wheat, and the like are illustrative sources of carbohydrate.

The compositions may also contain other materials such as, but not limited to, dried whey and other dairy byproducts, beet pulp, cellulose, fiber, fish oil, flax, vitamins, minerals, flavors, antioxidants, and taurine.

The compositions may also contain other optional ingredients. Optional ingredients can include Probiotic components (Bifidobacteria and/or Lactobacillus) and Prebiotic (fructooligosaccharides) components. Examples and amounts of Probiotic components and Prebiotic components that can be included are disclosed in United States Publication No. 2005/0158294, for example. Other optional ingredients that can be included are omega 6 and omega 3 fatty acids, carnitine, hexametaphosphate, glucosamine, chondroitin sulfate, carotenoids including beta carotene, vitamin E, and lutein, and those ingredients as shown in Table 1 below.

Examples

The following examples are provided to illustrate embodiments of the invention and are not intended to limit the scope thereof in any manner.

Preparation of Mannoheptulose-containing Avocado Meal

Fresh avocados (Lula variety) were obtained from Fresh King Incorporated (Homestead, FL). The avocados were manually split open and the pits were removed and discarded. The remaining skin and pulp were ground through a Hobart Commercial Food Preparation machine (Serial No. 11-10410235) using a 12 ¼ sieve. The ground avocado was then transferred to an Edwards Freeze Drier (Super Modulyo Model, Crawley, Sussex, England). The freeze drier was set at -20 °C for the first 24 hours, -5 °C for the following 24 hours and 5 °C for the final 72 hours. Upon removal from the freeze drier, the meal was ground to a powder using a Straub Grinding Mill (model 4E, Philadelphia, PA). The avocado meal was analyzed and found to contain about 10.35% mannoheptulose, by weight of the meal. It should be noted that the amount of mannoheptulose found in avocados varies with the particular strain and state of ripeness.

Preparation of Avocado Extract

Avocado extract containing enhanced levels of mannoheptulose is prepared in accordance with the following optional process and utilized in compositions of embodiments of the invention.

Whole avocado fruit (about 900 kilograms) is provided. The fruit is split and the pits are removed, either partially or wholly, providing about 225 kilograms of pitted avocado halves. The raw avocado is charged to a disintegrator, whereupon some agitation, water (about 3000 kilograms) and CELLUBRIX (commercially available from Novozymes A/S) (about 1 liter) is further charged. The mixture is further agitated and concurrently heated to about 66 °C. Upon completion of the charge, further CELLUBRIX (about 1 liter) is added, and the entire mixture is held under agitation for about 12 hours at a controlled pH of about 5.5. The temperature is then further increased to about 80 °C and then held for at least about 2 hours. The resulting digested plant mixture is then filtered at 80 °C to provide the carbohydrate extract as the filtrate. The carbohydrate extract is then evaporated in a simplified recirculation system at 80 °C, under vacuum, to provide the carbohydrate extract having from about 10% to about 20% solids and a pH of about 5.5. The extract is then further concentrated using a refractance window dryer to provide about 100 kilograms of the extract as a crystalline or powder (a yield of about 11% carbohydrate extract, based on the starting mass of the whole avocado fruit, which is analyzed as a yield from about 0.25% to about 4.5% mannoheptulose, based on the starting mass of the whole avocado fruit). It should be noted the amount of mannoheptulose found in avocados varies with the particular strain and state of ripeness of the fruit. The extract may be used in the compositions of embodiments of the invention.

Kibbles

Table 1 illustrates two kibble compositions having the following components at the approximate indicated amounts that can be prepared using processes that are standard in the art, including extrusion, and that can be fed to dogs and/or cats as a daily feed:

Table 1

| Component | Diet 1: Component Amount indicated as Wt% (unless noted) | Diet 2: Component Amount indicated as Wt% (unless noted) |
|---|---|---|
| Extract of Avocado* | 0.02 | 0.01 |
| Chicken, Chicken Byproduct Meal, Fish Meal, and Egg | 44 | 47 |
| Chicken Fat | 8 | 6 |
| Beet Pulp | 2 | 3 |
| Salts | 2.5 | 2 |
| Vitamins and Minerals** | 1 | 1 |
| Minors*** | 3.5 | 4 |
| Selenium (added as Sodium selenite) | 3.5 μg per g kibble | 4.0 μg per g kibble |
| Grains | Remainder | Remainder |

(continued)

| Component | Diet 1: Component Amount indicated as Wt% (unless noted) | Diet 2: Component Amount indicated as Wt% (unless noted) |
|---|---|---|
| (corn, sorghum, barley, rice, wheat) | | |

*Avocado may be substituted with other plant matter having enhanced mannoheptulose content. The incorporation of a mannoheptulose source likely replaces a similar amount of a grain source in the composition.
**Vitamins and Minerals may include: Vitamin E, beta-carotene, Vitamin A, Ascorbic Acid, Calcium Pantothenate, Biotin, Vitamin $B_{12}$, Vitamin $B_1$, Niacin, Vitamin $B_2$, Vitamin $B_6$, Vitamin $D_3$, Vitamin $D_2$, Folic Acid, Choline Chloride, Inositol, Calcium Carbonate, Dicalcium Phosphate, Potassium Chloride, Sodium Chloride, Zinc Oxide, Manganese Sulfate, Copper Sulfate, Manganous Oxide, Ferrous Sulfate, Potassium Iodide, Cobalt Carbonate.
***Minors may include: Fish oil, flax seed, flax meal, cellulose, flavors, antioxidants, taurine, yeast, carnitine, chondroitin sulfate, glucosamine, lutein, rosemary extract.

Administration

Eighty (n=80) Labrador Retrievers can be randomized by age, gender, and littermate to receive either a complete and nutritionally balanced control diet that is similar to Eukanuba Senior Large Breed or an experimental diet that is identical to the control diet except for the inclusion of mannoheptulose and selenium as disclosed below. The dogs can be split into two study groups.

Study 1: A total of 39 older Labrador Retrievers can be fed a nutritionally-balanced composition providing mannoheptulose at levels of 0 or about 2 mg/kg of body weight of the dog and added selenium at 0 μg per g diet or about 3.5 μg per g diet, respectively. Average age of the dogs (12 neutered males, 27 spayed females) at the start of a 4-year study is 6.7 years with a range of 5.1 to 8.2 years of age for the youngest and oldest dog within the cohort, respectively. The control composition can be fed as a nutritionally-balanced composition, and it contains no mannoheptulose (0 mg/kg), added selenium (0 μg per g diet), avocado extract, avocado meal, or avocado concentrate. The test composition can be the nutritionally-balanced control composition formulated with avocado extract, avocado meal, or avocado concentrate to provide mannoheptulose at a dose of about 2 mg/kg body weight of the dog and added selenium at about 3.5 μg per g diet. Older dogs can be fed one-half their daily allotment of food at 0730 and 1430 each day. Dogs can be fed to maintain body weight and body composition score (BCS) within a 2-4 score range. If food adjustments were to be made, they should be made on a quarterly basis. All dogs can be fasted overnight, and morning meals can be withheld until blood collections could be conducted for all immune measurements. Water is provided ad lib.

Study 2: A total of 41 younger Labrador Retrievers can be fed a nutritionally-balanced composition providing mannoheptulose at levels of 0 or about 2 mg/kg of body weight of the dog and added selenium at 0 μg per g diet or about 3.5 μg per g diet, respectively. Average age of the dogs (12 neutered males, 29 spayed females) at the start of the 36-month feeding study is 4.0 years with a range of 2.0 to 6.1 years of age for the youngest and oldest dog within the cohort, respectively. The control composition can be fed as a nutritionally-balanced composition (Eukanuba Senior Maintenance Formula), and it contains no mannoheptulose (0 mg/kg), added selenium (0 μg per g diet), avocado extract, avocado meal, or avocado concentrate. The test composition can be the nutritionally-balanced control composition formulated with avocado extract, avocado meal, or avocado concentrate to provide mannoheptulose at a dose of about 2 mg/kg body weight of the dog and added selenium at about 3.5 μg per g diet. Younger dogs can be fed one-half their daily allotment of food at 0730 and 1430 each day. Dogs can be fed to maintain body weight and body composition score (BCS) within a 2-4 score range. If food adjustments were to be made, they should be made on a quarterly basis. However, all dogs can be fasted overnight, and morning meals can be withheld until blood collections could be conducted for all immune measurements. Water is provided ad lib.

Methods

The glucose anti-metabolite, such as mannoheptulose, can be measured in a pet food or supplement, as follows.

Procedure (use only deionized water):

Weigh approx. 0.1 g feed/ingredient into a 15 mL plastic centrifuge tube.
Add 10 mL water to the tube and shake for 5 min.
Centrifuge tube at max speed (2440 g) for 5 min.
Dispense some of the supernatant into a 0.2 μm nylon centrifuge filter and spin at max speed (14000 g) for 5 min. The sample is ready for injection.

Prepare a 10 μg/ml carbohydrate standard by dissolving 10 mg of each carbohydrate in 1 L water.

Prepare a 1 μg/ml carbohydrate standard by dissolving 100 μl of the 10 μg/ml solution in 900 μl water.

Prepare a 0.1 μg/ml carbohydrate standard by dissolving 10 μl of the 10 μg/ml solution in 990 μl water.

IC conditions: Eluent clean-up: Ionpac ATC-3 (Dionex P/N 059661), Boratetrap (Dionex P/N 047078). Column: CarboPac PA20 (Dionex P/N 060142), 2 mm Aminotrap precolumn (Dionex P/N 046122). Column Temperature: 30°C

PUMP

Flow: 0.4 ml/min

Eluents: A=Water, B=0.2 M NaOH, D=1 M NaOH.

| 0 min | 4%B | 0%C | 0%D |
| --- | --- | --- | --- |
| 14 min | 4%B | 0%C | 0%D |
| 14.01 min | 4%B | 0%C | 40%D |
| 20 min | 4%B | 0%C | 40%D |
| 20.01 min | 4%B | 0%C | 0%D |
| 30.0 min | 4%B | 0%C | 0%D |

Note: It may be necessary to regenerate the column before use with a 30-60 min flush with 1 M NaOH, followed by a 30-60 min rinse with 95% water: 5% 0.2M NaOH. Follow the recommended procedure from Dionex to prepare eluents.

AUTOSAMPLER

Injection Volume: 10 μl full loop

INTEGRATED AMPEROMETRY WAVEFORM

| Time = 0 | Potential = 0.1 |
| --- | --- |
| Time = 0.2 | Potential = 0.1, Begin Integration |
| Time = 0.4 | Potential = 0.1, End Integration |
| Time = 0.41 | Potential = -2 |
| Time = 0.42 | Potential = -2 |
| Time = 0.43 | Potential = 0.6 |
| Time = 0.44 | Potential = -0.1 |
| Time = 0.5 | Potential = -0.1 |

NOTE: Quantitate all peaks using peak areas. An example of an integrated amperometry waveform can be seen in the figure.

References:

1. Shaw, P.E.; Wilson, C.W.; Knight, R.J. J. Agric. Food Chem. 1980, 28, 379-382.

2. Dionex CarboPac20 Document No. 031844-01.

Selenium

A. The selenium content of a feed can be measured by AOAC Official Method 996.16(G):

Selenium in Feeds and Premixes: Fluorometry method 2000 as follows.

B. Apparatus:

a. Fluorometer - with excitation at 375 nm and emission at 525 nm. If possible, adjust fluoremeter to 1 scale unit = 1 ng.
b. Fume hood - suitable for handling $HClO_2$
c. Digestion system - 21x26x7.4 cm aluminum block with 80 holes (22 mm diameter) set on 30x30 cm hot plate (any commercially available if tests and standard solutions can be heated simultaneously). Alternatively, micro Kjeldahl digestion system capable of holding 30 mL flasks or straight-walled tubes may be used.
d. Digestion vessels - for digestion system. Screw capped (Teflon lined) 20x150 mm test tubes; micro Kjeldahl flasks, 30 mL, or straight-walled tubes are acceptable.
e. Extractor mechanized rotation unit - maintaining 60-70 rpm/min. Hand-held containing allowing mixture of rack (4 rows of 10 tubes) of tubes is suitable.
f. Pipettor - delivering 5 mL (+/- 1 %).
g. $H_2O$ baths - 1) maintaining 60° +/-2° and 2) boiling $H_2O$.
h. Vortex mixer.
i. Volumetric flasks - 100 and 1000 mL.
j. Erlenmeyer flasks - 250-1000 mL and 2L.
k. Filter paper - qualitative paper, 11 $\mu$m retention

C. Reagents:

All reagents should be at least analytical grade. Use deionized water distiller in glass for preparation of solutions and dilutions.

a. Cyclohexane.
b. Hydrochloric acid solution - 0.1M. Pipet 8.3 mL concentrated HCl into 1L volumetric flask and dilute to volume with water. Proportionate amounts for any convenient volume may be used.
c. Nitric acid - 70%.
d. Perchloric acid - 70%.
e. 2,3-Diaminonaphthalene (DAN) reagent - weight 1.0 g DAN powder (97% purity) and transfer to 2 L Erlenmeyer flask. Add 500 m 0.1M HCl and warm 15 min to 60C water bath. Stir to help dissolve powder. Dilute to 1 L with 0.1 M HCl. Extract solution 3-5 min with 40-50 mL cyclohexane and discard cyclohexane layer. Repeat extraction three times. Filter DAN reagent through filter paper pre wet with 0.1M HCl. DAN reagent is stable at least two weeks when protected from light in refrigerator.
f. (Ethylenedinitrilo) tetraacetic acid (EDTA) standard solutions. (1) EDTA standard stock solution - 0.1M. Place 37.2 g (ethylenedinitrilo) tetraacetic acid, disodium salt, into 1 L volumetric flask and dilute to volume with water. (2) EDTA working standard solution - 0.01M. Depending on number of tubes to be analyzed, dilute sufficient volume EDTA standard stock solution (1+9) with water to provide 15 mL/tube.
g. Selenite standard solutions. (1) Selenite standard stock solution - 0.4 $\mu$g Se/mL. Pipet 100 mL selenite standard solution (1000 $\mu$g Se/mL in 1% $HNO_3$; commercially available atomic absorption standard solution is suitable) into 1 L volumetric flask and dilute to volume with 0.1M HCL. From this solution, pipet 40 mL into 100 mL volumetric flask and dilute to volume with 0.1M HCl. (Note: as alternative, dissolve 0.400 g Se in $HNO_3$ in 1 L volumetric flask and dilute to volume with 0.1M HCl; dilute 10.0 mL of this solution to 1 L with 0.1M HCl in volumetric flask. Finally, dilute 10 mL of this solution to 100 mL with 0.1M HCl in volumetric flask and use directly.) (2) Selenite calibrating standard solution. Pipet 0.00 (reagent blank), 0.200, 0.500, 1.00, and 1.50 mL selenite standard stock solution into separate digestion vessels to obtain 0.00, 0.08, 0.200, 0.400, and 0.600 $\mu$g Se/vessel.
h. Sodium selenite standard solutions - 0.4 $\mu$g Se/mL. Transfer 0.1915 g anhydrous $Na_2SeO_4$ into 1L volumetric flask, dilute to volume with water. Mix well. From this solution, pipet 5.00 mL into 1 L volumetric flask and dilute to volume with water.

D. Quality Assurance:

Starting with digestion, with each set of test solutions, run two reagent blanks and at least four selenite standard solutions, C(g)(2), (e.g., 0.080, 0.200, 0.400, and 0.600 $\mu$g Se/vessel); and one tube containing 0.500 mL sodium selenate solution, C(h), (0.2 $\mu$g Se/vessel) to check adequacy of reduction step, since selenate does not react with DAN. Recoveries of 95-105% are expected. Otherwise, reanalyze the entire set.
Appropriate NIST Standard Reference Materials (SRMs) can be included in analysis, e.g., NIST 1643c, trace elements in water (most convenient to use), NIST 1567a, wheat flour; and NIST 1577b, bovine liver. Predigestion steps for SRMs may be omitted. Transfer or weigh appropriate amounts of SRMs directly into digestion tubes.

E. Determination:

a. Pre-digestion - weigh ca 10 g premix or feed into 250-1000 mL Erlenmeyer flask and record weight to the nearest 10 mg ($W_a$). (Use the largest flask feasible to minimize foaming problems.) Add slowly and with care 75 m: $HNO_3$ and boiling chip (or several glass beads). (Caution: Matrices with large amounts of limestone or easily oxidizable materials may cause foaming when $HNO_3$ is added.) Heat on hot plate until as much of material is in solution as possible and nitric oxide fumes subside (usually 15 min are adequate). Cool solution and dilute quantitatively with water so that Se content falls between 0.04 and 0.60 $\mu$g/mL. Record final volume of diluted predigest solution to the nearest mL ($V_1$).

b. Digestion - Proceed as follows:

1. Mix thoroughly predigest solution from A. to suspend all undissolved materials. Pipet 1.00 mL aliquots into test tubes (digestion vessels). If Se content of predigest solution is low (<0.02 $\mu$g/mL), aliquot up to 10 mL can be used. Record volume to nearest 0.01 mL ($V_a$).

2. Add porous boiling bead so each tube, including blanks, selenite calibrating standard solutions, and $Na_2SeO_4$ standard solution. If glass beads are used, add 2-3 beads.

3. Add 4 mL $HNO_3$ and 1 mL $HClO_4$ [or 5 mL $HClO_4$-$HNO_3$ mixture (1+4, v/v)] to each tube.

4. Place tubes in aluminum heating block. Raise temperature slowly to 210C (ca 2h). White fumes of $HClO_4$ should be visible in tubes at completion of digestion. After reaching white fume state, heat additional 15 min.

5. Remove tubes from heating block. Cool tubes to room temperature and heating block to 110-150C.

c. Reduction - add 0.5 mL concentrated HCl to tubes from b5. Place tubes again in heating block and heat 30 min. Ensure that temperature is maintained between 110-150C for the entire period.

d. Derivization and quantitation:

1. Remove tubes from heating block and let cool. It is critical that at this step tubes are at room temperature. (Note - procedure may be interrupted at any time, up to and including this step.)

2. Add 15 mL EDTA working standard solution, C(f)(2), and 2 mL DAN reagent, C(e), to test tube. (Note - both solutions may be added simultaneously; however, they should not be mixed together more than 10 min immediately before use or precipitate will form.) Mix each tube well on Vortex mixer, taking Vortex to the bottom of tube at least twice.

3. Place rack of tubes in 60C water bath and maintain 30 min. Ensure that water level is above level of reaction mixture.

4. Remove rack from water bath and cool tubes 5 min in runner tap water.

5. Add 5 mL cyclohexane to each tube. Cap tubes with Teflon lined ca. Extract 5-10 min in rotating extraction unit (60-70 rpm/min). (Note - extraction can be performed manually by shaking (inverting) rack of tubes for period of time that gives maximum extraction.)

6. Transfer cyclohexane layer into fluorometer curvettes. Ensure that solution is free of any suspended water droplets that might adhere to wall of curvette in light path.

7. Set excitation wavelength of fluorometer at 375 nm and emission at 525 nm. Zero fluorometer with cyclohexane and read blank to judge quality of DAN reagent. If reading is greater than 2-3 fluorescence units, DAN reagent should be extracted again with cyclohexane. Zero fluorometer against blank.

8. Determine fluorescence (F) of selenite calibrating standard solutions and calculation regression equation for standard curve. Use slope (k) in calculating Se concentrations in test solutions. Depending on equipment available, this may be automatically done by built-in calibration procedure. (Note - fluorescence response is linear when using selenite calibrating standard solutions at concentrations described in C(g)(2). Standards containing as high as 2 $\mu$g Se/vessel may maintain linear relationship.)

9. Determine fluorescence of test solution.

F. Calculations:

Depending on support software of fluorometer used, calibration data, dilution factors, and test portion weights may be stored in computer and final content of Se [$\mu$g/g (ppm)] may be printed out. Report $\mu$g Se/g to three significant digits.

When using manual system, calculate Se content in test sample as follow:

$$\mu g \ Se/g = (F/g) \ (V_1/V_A) \ (1/W_a)$$

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

The citation of any document is not an admission that it is prior art with respect to any invention disclosed or claimed herein or that it alone, or in any combination with any other reference or references, teaches, suggests or discloses any such invention.

While particular embodiments of the invention have been illustrated and described, it would be obvious to those skilled in the art that various other changes and modifications can be made without departing from the scope of the invention.

## Claims

1. A pet food composition comprising a glucose anti-metabolite and a source of selenium, wherein the composition is a nutritionally balanced pet food composition,
   wherein the source of selenium is an ingredient having at least 100 $\mu g$ selenium per 100 g of the ingredient or an inorganic source of selenium;
   wherein the glucose anti-metabolite comprises a glucose anti-metabolite component selected from the group consisting of 2-deoxy-D-glucose; 5-thio-D-glucose; 3-O-methylglucose; 1,5-anhydro-D-glucitol; 2,5-anhydro-D-glucitol; 2,5-anhydro-D-mannitol; mannoheptulose; and mixtures and combinations thereof; and
   wherein the selenium content provided by the source of selenium is 1.25 to 10.0 $\mu g$ per g of the composition.

2. The composition of claim 1 and wherein the selenium content provided by the source of selenium is 1.25 to 6.0 $\mu g/g$ of the composition, or from 2.0 to 6.0 $\mu g/g$ of the composition, or from 2.0 to 5.0 $\mu g/g$ of the composition, or from 3.0 to 4.0 $\mu g/g$ of the composition.

3. The composition of any of the preceding claims and wherein the glucose anti-metabolite is present in the composition at less than 5% by weight of the composition, or at less than 2% by weight of the composition.

4. The composition of any of the preceding claims and wherein the glucose anti-metabolite is present in the composition at from 0.0001 % to 0.5% by weight of the composition.

5. The composition of any of the preceding claims and wherein the glucose anti-metabolite is present in the composition at from 0.1% to 10% by weight of the composition, or from 0.1 % to 5% by weight of the composition.

6. The composition of any of the preceding claims and wherein the source of selenium is selected from the group consisting of sodium selenite, sodium selanate, selenium oxide, selenide, selenocysteine, selenomethionine, selenized yeast, selenized garlic, selenized cabbage and combinations and mixtures thereof.

7. The composition of any of the preceding claims and wherein the glucose anti-metabolite comprises mannoheptulose.

8. The composition of any of the preceding claims and wherein the composition is selected from the group consisting of wet composition, semi-moist composition, dry composition, and combinations thereof.

9. The composition of claim 1 further comprising an endogenous selenium.

10. The pet food composition of claim 10 and wherein endogenous selenium is present in amounts of from 0.30 to 0.60 $\mu g/g$ composition, and the added selenium is present at from 3.0 to 6.0 $\mu g/g$ composition.

**Patentansprüche**

1. Haustierfutterzusammensetzung umfassend einen Glukose-Antimetaboliten und eine Selenquelle, wobei die Zusammensetzung eine ernährungsphysiologisch ausgewogene Haustierfutterzusammensetzung ist,
wobei die Selenquelle ein Bestandteil mit mindestens 100 μg Selen pro 100 g des Bestandteils oder eine anorganische Selenquelle ist;
wobei der Glucose-Antimetabolit eine Glucose-Antimetabolitkomponente umfasst, ausgewählt aus der Gruppe bestehend aus 2-Desoxy-D-glucose; 5-Thio-D-glucose; 3-O-Methylglucose; 1,5-Anhydro-D-glucitol; 2,5-Anhydro-D-glucitol; 2,5-Anhydro-D-mannitol; Mannoheptulose; und Mischungen und Kombinationen davon; und
wobei der Selengehalt, der durch die Selenquelle bereitgestellt wird, 1,25 bis 10,0 μg pro g der Zusammensetzung beträgt.

2. Zusammensetzung nach Anspruch 1, wobei der Selengehalt, der durch die Selenquelle bereitgestellt wird, 1,25 bis 6,0 μg pro g der Zusammensetzung oder 2,0 bis 6,0 μg pro g der Zusammensetzung oder 2,0 bis 5,0 μg pro g der Zusammensetzung oder 3,0 bis 4,0 μg pro g der Zusammensetzung beträgt.

3. Zusammensetzung nach einem der vorhergehenden Ansprüche, wobei der Glucose-Antimetabolit in der Zusammensetzung in einer Menge von weniger als 5 Gew.-% der Zusammensetzung oder weniger als 2 Gew.-% der Zusammensetzung vorliegt.

4. Zusammensetzung nach einem der vorhergehenden Ansprüche, wobei der Glucose-Antimetabolit in der Zusammensetzung in einer Menge von 0,0001 Gew.-% bis 0,5 Gew.-% der Zusammensetzung vorliegt.

5. Zusammensetzung nach einem der vorhergehenden Ansprüche, wobei der Glucose-Antimetabolit in der Zusammensetzung in einer Menge von 0,1 bis 10 Gew.-% der Zusammensetzung oder von 0,1 bis 5 Gew.-% der Zusammensetzung vorliegt.

6. Zusammensetzung nach einem der vorhergehenden Ansprüche, wobei die Selenquelle ausgewählt ist aus der Gruppe bestehend aus Natriumselenit, Natriumselanat, Selenoxid, Selenid, Selenocystein, Selenomethionin, selenisierter Hefe, selenisiertem Knoblauch, selenisiertem Kohl und Kombinationen und Mischungen davon.

7. Zusammensetzung nach einem der vorangehenden Ansprüche, wobei der Glucose-Antimetabolit Mannoheptulose umfasst.

8. Zusammensetzung nach einem der vorhergehenden Ansprüche, wobei die Zusammensetzung ausgewählt ist aus der Gruppe bestehend aus einer feuchten Zusammensetzung, einer halbfeuchten Zusammensetzung, einer trockenen Zusammensetzung und Kombinationen davon.

9. Zusammensetzung nach Anspruch 1, die ferner ein endogenes Selen umfasst.

10. Haustierfutterzusammensetzung nach Anspruch 10, wobei endogenes Selen in Mengen von 0,30 bis 0,60 μg pro g der Zusammensetzung vorliegt und das zugesetzte Selen in Mengen von 3,0 bis 6,0 μg pro g der Zusammensetzung vorliegt.

**Revendications**

1. Composition alimentaire pour animaux de compagnie comprenant un antimétabolite du glucose et une source de sélénium, dans laquelle la composition est une composition alimentaire pour animaux de compagnie nutritionnellement équilibrée,
dans laquelle la source de sélénium est un ingrédient ayant au moins 100 μg de sélénium pour 100 g de l'ingrédient ou une source inorganique de sélénium ;
dans laquelle l'antimétabolite du glucose comprend un composant antimétabolite du glucose choisi dans le groupe constitué de 2-déoxy-D-glucose ; 5-thio-D-glucose ; 3-O-méthylglucose ; 1,5-anhydro-D-glucitol ; 2,5-anhydro-D-glucitol ; 2,5-anhydro-D-mannitol ; mannoheptulose ; et des mélanges et combinaisons de ceux-ci ; et
dans laquelle la teneur en sélénium fournie par la source de sélénium va de 1,25 à 10,0 μg par g de la composition.

2. Composition selon la revendication 1 et dans laquelle la teneur en sélénium fournie par la source de sélénium va de 1,25 à 6,0 μg/g de la composition, ou de 2,0 à 6,0 μg/g de la composition, ou de 2,0 à 5,0 μg/g de la composition, ou de 3,0 à 4,0 μg/g de la composition.

3. Composition selon l'une quelconque des revendications précédentes et dans laquelle l'antimétabolite du glucose est présent dans la composition à raison de moins de 5 % en poids de la composition, ou à raison de moins de 2 % en poids de la composition.

4. Composition selon l'une quelconque des revendications précédentes et dans laquelle l'antimétabolite du glucose est présent dans la composition à raison de 0,0001 % à 0,5 % en poids de la composition.

5. Composition selon l'une quelconque des revendications précédentes et dans laquelle l'antimétabolite du glucose est présent dans la composition à raison de 0,1 % à 10 % en poids de la composition, ou de 0,1 % à 5 % en poids de la composition.

6. Composition selon l'une quelconque des revendications précédentes et dans laquelle la source de sélénium est choisie dans le groupe constitué de sélénite de sodium, sélénate de sodium, oxyde de sélénium, séléniure, sélénocystéine, sélénométhionine, levure sélénisée, ail sélénisé, chou sélénisé et des combinaisons et mélanges de ceux-ci.

7. Composition selon l'une quelconque des revendications précédentes et dans laquelle l'antimétabolite du glucose comprend du mannoheptulose.

8. Composition selon l'une quelconque des revendications précédentes et dans laquelle la composition est choisie dans le groupe constitué de composition mouillée, composition semi-humide, composition sèche, et des combinaisons de celles-ci.

9. Composition selon la revendication 1 comprenant en outre un sélénium endogène.

10. Composition alimentaire pour animaux de compagnie selon la revendication 10 et dans laquelle du sélénium endogène est présent en des quantités allant de 0,30 à 0,60 μg/g de composition, et le sélénium ajouté est présent à raison de 3,0 à 6,0 μg/g de composition.

EP 2 704 589 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050249841 A1
- US 20090252834 A1
- US 20050158294 A
- US 1110410235 B

**Non-patent literature cited in the description**

- **WEINDRUCH ; WALFORD.** The Retardation of Aging and Disease by Dietary Restriction. 1988
- **YU.** Modulation of Aging Processes by Dietary Restriction. CRC Press, 1994
- **FISHBEIN.** Biological Effects of Dietary Restriction. Springer, 1991
- **MCKAY et al.** The Effect of Retarded Growth Upon the Length of Lifespan and Upon Ultimate Body Size. *J. Nutr.,* 1935, vol. 10, 63-79
- **MASORO, E.J.** Overview of Caloric Restriction and Ageing. *Mech. Aging Dev.,* 2005, vol. 126, 913-922
- **KALANT et al.** Effect of Diet Restriction on Glucose Metabolism and Insulin Responsiveness and Aging Rats. *Mech. Aging Dev.,* 1988, vol. 46, 89-104
- **BALKAU ; ESCHWEGE.** *Diabetes Obes. Metab.,* 1999, vol. 1 (1), 23-31
- **MASORO et al.** *J. Gerontol. Biol. Sci.,* 1992, vol. 47, B202-B208
- **KOIZUMI et al.** *J. Nutr.,* 1987, vol. 117, 361-367
- **LANE et al.** *Proc. Nat. Acad. Sci.,* 1996, vol. 93, 4154-4164
- **REZEK et al.** *J. Nutr.,* 1972, vol. 106, 143-157
- **ROTH et al.** *Ann. NY Acad. Sci.,* 2001, vol. 928, 305-315
- **LEE.** *Medicinal plant composition suitable for each blood type,* 2004
- **SHAW, P.E. ; WILSON, C.W. ; KNIGHT, R.J.** *J. Agric. Food Chem.,* 1980, vol. 28, 379-382